# EUROPEAN PATENT APPLICATION

(11) **EP 4 770 228 A1**
(43) Date of publication of application: **01.07.2026**
(21) Application number: 23949362.0
(22) Date of filing: 21.08.2023
(51) Int. Cl.: H04W 72/0446

(54) **SIGNAL TRANSMISSION METHOD AND APPARATUS, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Grassi, Stefano
(86) International application number: PCT/CN2023/114099
(87) International publication number: WO 2025/039169

(57) **Abstract**

Embodiments of the present application provide a signal transmission method and apparatus, a terminal device, and a network device. The method comprises: a terminal device detects a first signal on a first time unit, the first time unit being a time unit configured to comprise uplink transmission.

## Description

### TECHNICAL FIELD

Embodiments of the present disclosure relate to the technical field of mobile communications, and more particularly to, methods for signal transmission, devices for signal transmission, a terminal device, and a network device.

### BACKGROUND

A flexible slot format is introduced in a New Radio (NR) communication system. The network may configure each slot as a downlink slot used for downlink transmission, an uplink slot used for uplink transmission, and a flexible slot. The flexible slot may include an Uplink (UL) symbol, a downlink (DL) symbol and a flexible symbol.

In practical applications, the terminal device needs to detect a downlink signal from a network device according to a slot format of a cell. That is to say, the terminal device detects the downlink signal on the downlink slot or the flexible slot. However, for a receiver/terminal device having low complexity, low cost, and low power consumption, due to the low accuracy of a local clock of the receiver/terminal device, the downlink signal cannot be accurately received on the downlink slot or the flexible slot, which results in missed detection of the downlink signal.

### SUMMARY

Embodiments of the present disclosure provide methods for signal transmission, devices for signal transmission, a terminal device, and a network device.

In a first aspect, the method for signal transmission provided by the embodiment of the present disclosure includes the following operation.

A terminal device detects a first signal on first time unit(s), where the first time unit is configured as a time unit containing uplink transmission.

In a first aspect, the method for signal transmission provided by the embodiment of the present disclosure includes the following operation.

A network device sends a first signal on first time unit(s), where the first time unit is configured as a time unit containing uplink transmission.

In a third aspect, the device for signal transmission provided by the embodiment of the present disclosure is applied to a terminal device, and includes a receiving unit.

The receiving unit is configured to detect a first signal on first time unit(s), where the first time unit is configured as a time unit containing uplink transmission.

In a fourth aspect, the device for signal transmission provided by the embodiment of the present disclosure is applied to a network device, and includes a sending unit.

The sending unit is configured to send a first signal on first time unit(s), where the first time unit is configured as a time unit containing uplink transmission.

In a fifth aspect, the embodiment of the present disclosure provides a terminal device. The terminal device includes a processor and a memory. The memory is configured to store a computer program, and the processor is configured to invoke and execute the computer program stored in the memory to perform the aforementioned method for signal transmission.

In a sixth aspect, the embodiment of the present disclosure provides a network device. The network device includes a processor and a memory. The memory is configured to store a computer program, and the processor is configured to invoke and execute the computer program stored in the memory to perform the aforementioned method for signal transmission.

The chip provided by the embodiment of the present disclosure is configured to implement the aforementioned methods for signal transmission.

Specifically, the chip includes a processor configured to invoke and execute a computer program from a memory, to enable a device on which the chip is mounted to perform the aforementioned methods for signal transmission.

The computer-readable storage medium provided by the embodiment of the present disclosure is configured to store a computer program that causes a computer to perform the aforementioned methods for signal transmission.

The computer program product provided by the embodiment of the present disclosure includes computer program instructions that cause a computer to perform the aforementioned methods for signal transmission.

The computer program provided by the embodiment of the present disclosure causes, when the computer program is executed on the computer, a computer to perform the aforementioned methods for signal transmission.

The embodiments of the present disclosure provide the methods for signal transmission. The network device may send the first signal on the time unit configured for uplink transmission, and correspondingly, the terminal device may detect the first signal on the time unit configured to include the uplink transmission. In this way, the terminal device is able to detect the first signal on the time unit that is not originally used for detecting the first signal, which expands the transmission range and detection range of the first signal, thereby reducing the delay of detecting the first signal by the terminal device. In addition, even if the terminal device has the clock with low accuracy, the terminal device is able to detect the first signal in a larger detection range, which increases the possibility of the detection of the first signal, thereby avoiding the missed detection of the first signal to a certain extent.

### BRIEF DESCRIPTION OF THE DRAWINGS

The accompanying drawings, which are illustrated herein, provide further understanding of the present disclosure and constitute a part of the present disclosure. The exemplary embodiments of the present disclosure and description thereof are intended to be illustrative of the present disclosure and do not constitute an undue limitation of the present disclosure. In the accompanying drawings:
FIG. 1 is a schematic diagram of a architecture of a communication system according to an embodiment of the present disclosure;
FIG. 2 shows a receiver according to an embodiment of the present disclosure;
FIG. 3 is a first flowchart of a method for signal transmission according to an embodiment of the present disclosure;
FIG. 4 is a first schematic diagram of a slot structure according to an embodiment of the present disclosure;
FIG. 5 is a second schematic diagram of a slot structure according to an embodiment of the present disclosure;
FIG. 6 is a third schematic diagram of a slot structure according to an embodiment of the present disclosure;
FIG. 7 is a second flowchart of a method for signal transmission according to an embodiment of the present disclosure;
FIG. 8 is a schematic structural diagram of a device 800 for signal transmission according to an embodiment of the present disclosure;
FIG. 9 is a schematic structural diagram of a device 900 for signal transmission according to an embodiment of the present disclosure;
FIG. 10 is a schematic structural diagram of a communication device according to an embodiment of the present disclosure;
FIG. 11 is a schematic structural diagram of a chip according to an embodiment of the present disclosure; and
FIG. 12 is a schematic block diagram of a communication system according to an embodiment of the present disclosure.

### DETAILED DESCRIPTION

The technical schemes of the embodiments of the present disclosure would be described in conjunction with the accompanying drawings in the embodiments of the present disclosure. It is apparent that the described embodiments are only part of the embodiments of the present disclosure, not all the embodiments. Based on the embodiments in the present disclosure, all other embodiments obtained by those of ordinary skill in the art without creative work shall fall within the scope of protection of the present disclosure.

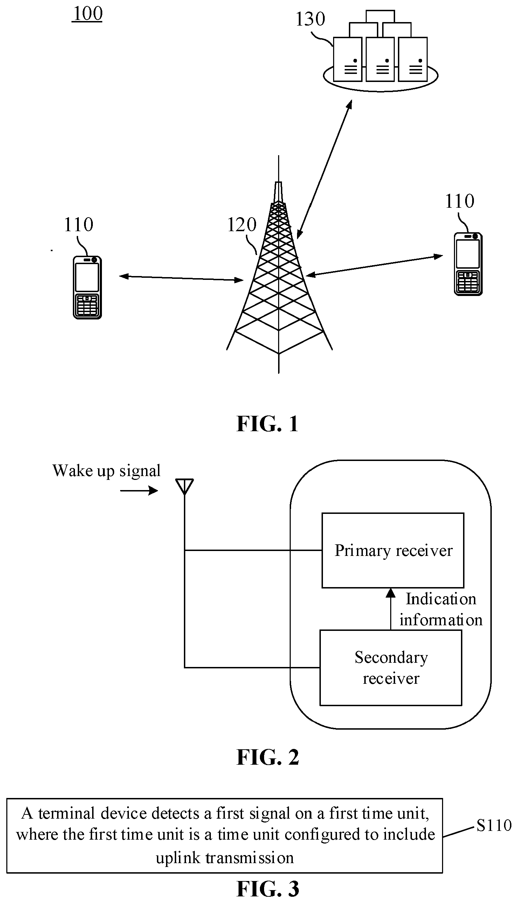

FIG. 1 is a schematic diagram of a scenario to which an embodiment of the present disclosure is applied.

As illustrated in FIG. 1, the communication system 100 includes a terminal device 110 and a network device 120. The network device 120 may communicate with the terminal device 110 through an air interface. Multi-service transmission between the terminal device 110 and the network device 120 is supported.

It is to be understood that the embodiments of the present disclosure are illustrated with reference to the communication system 100 only, but are not limited thereto. In other words, the technical solutions of the embodiments of the present disclosure may be applied to various communication systems, such as a Long Term Evolution (LTE) system, an LTE Time Division Duplex (TDD), a Universal Mobile Telecommunication System (UMTS), an Internet of things (IoT) system, a Narrow Band Internet of Things (NB-IoT) system, an Enhanced Machine-Type Communications (eMTC) system, a 5-th Generation (5G) communication system (also referred to as a NR communication system), or a future communication system, etc.

In the communication system 100 illustrated in FIG. 1, the network device 120 may be an access network device that communicates with the terminal device 110. The access network device may provide communication coverage for a specific geographic region and may communicate with a terminal device 110 (e.g., a User Equipment (UE)) in the coverage.

The network device 120 may be an Evolutional Node B (eNB or eNodeB) in an LTE system, a Next Generation Radio Access Network (NG RAN) device, a Base Station (gNB) in an NR system, or a wireless controller in a Cloud Radio Access Network (CRAN). The network device may further be a relay station, an access point, a vehicle-mounted device, a wearable device, a hub, a switch, a network bridge, a router, a network device in a future evolved Public Land Mobile Network (PLMN) or the like.

The terminal device 110 may be any terminal device, which includes, but not limited to, a terminal device that has a wired or wireless connection to the network device 120 or other terminal devices.

As an example, the terminal device 110 may be an access terminal, a UE, a user unit, a user station, a mobile station, a mobile platform, a remote station, a remote terminal, a mobile device, a user terminal, a terminal, a wireless communications device, a user agent, or user apparatus. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a handheld device with a wireless communication function, a computing device, another processing device connected to a wireless modem, a vehicle-mounted device, a wearable device, a terminal device in a 5G network, a terminal device in a future evolved network or the like.

The terminal device 110 may be applied to Device to Device (D2D) communication.

The wireless communication system 100 may further include a core network device 130 that communicates with the network deice 120. The core network device 130 may be a 5G core (5GC) device, such as an Access and Mobility Management Function (AMF), an Authentication Server Function (AUSF), a User Plane Function (UPF), or a Session Management Function (SMF). Optionally, the core network device 130 may also be an Evolved Packet Core (EPC) device in the LTE network, for example, a Session Management Function + Core Packet Gateway (SMF+PGW-C) device. It should be understood that the SMF+PGW-C may achieve functions that can be achieved by both the SMF and PGW-C. During the process of network evolution, the aforementioned core network device may also be called by other names, or new network entities may be formed by dividing the functions of the core network, which is not limited by the embodiments of the present disclosure.

A connection may be established between various functional units in the communication system 100 through a Next Generation (NG) interface, to realize communication.

For example, the terminal device may establish an air interface connection with the access network device through an NR interface for transmitting user plane data and control plane signaling. The terminal device may establish a control plane signaling connection with the AMF through an NG interface 1 (abbreviated as N1). The access network device, such as a next generation wireless access base station (gNB), may establish a user plane data connection with the UPF through an NG interface 3 (abbreviated as N3). The access network device may establish a control plane signaling connection with the AMF through an NG interface 2 (abbreviated as N2). The UPF may establish a control plane signaling connection with the SMF through an NG interface 4 (abbreviated as N4). The UPF may interact the user plane data with a data network through an NG interface 6 (abbreviated as N6). The AMF may establish a control plane signaling connection with the SMF through an NG interface 11 (abbreviated as N11). The SMF may establish a control plane signaling connection with a policy control function (PCF) through an NG interface 7 (abbreviated as N7).

One network device, one core network device and two terminal devices are exemplarily shown in FIG. 1. Optionally, the wireless communication system 100 may include multiple network devices, and another number of terminal devices may be included in the coverage of each network device, which is not limited in the embodiments of the present disclosure.

It should be noted that FIG. 1 only illustrates the system to which the present disclosure is applicable by way of example. Of course, the methods illustrated in the embodiments of the present disclosure may also be applicable to other systems. Moreover, the terms "system" and "network" the present disclosure are usually interchangeably used herein. The term "and/or" in the disclosure is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the related objects is "or". It is to be understood that the term "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B. It should also be understood that the term "correspond" referred to in the embodiments of the present disclosure may mean that there is a direct correspondence or an indirect correspondence between the two, may also mean that there is an association relationship between the two, and may also be a relationship between indication and being indicated, configuration and being configured, etc. It should also be understood that the phrase "predefined" or "predefined rules" referred to in the embodiments of the present disclosure may be implemented by pre-storing corresponding codes, tables, or by other means that may be used to indicate relevant information in devices (such as terminal devices and network devices). The specific implementations of which are not limited in the present disclosure. For example, predefined may refer to what is defined in the protocol. It should also be understood that in the embodiments of the present disclosure, the "protocol" may be a standard protocol in the communication field. For example, the protocol may include an LTE protocol, an NR protocol, and related protocols applied in future communication systems, which are not limited in the present disclosure.

In order to facilitate understanding of the technical solutions of the embodiments of the present disclosure, related technologies of the embodiments of the present disclosure are described below. The following related technologies used as optional solutions may be combined with technical solution of the embodiments of the present disclosure in various ways, and the combinations belong to the scope of protection of the embodiments of the present disclosure.

The flexible slot format is introduced in the NR system. That is to say, a downlink symbol, a flexible symbol and an uplink symbol may be included in one slot. The flexible symbol has the following three characteristics.

1) The flexible symbol represents that the direction of the symbol is undetermined, and may be changed to be the downlink symbol or the uplink symbol through other signaling.

2) The flexible symbol may also represent a symbol reserved for the usage in the future for forward compatibility.

3) The flexible symbol is used for transceiver conversion of the terminal device, and is similar to the Guard Interval (GP) symbol in the LTE TDD system. The terminal device completes the transceiver conversion within the symbol.

In the NR system, various formats of the flexible slot are defined, and include: full downlink slot, full uplink slot, full flexible slot, and slot formats with different number of downlink symbols, uplink symbols and flexible symbols. Each of different slot formats corresponds to one slot format index.

Multiple manners for configuring the slot format are supported in the NR system, and include: the slot format is configured through semi-static uplink and downlink configuration signaling and the slot format is configured through dynamic uplink and downlink indication signaling. The semi-static uplink and downlink configuration signaling includes *tdd-UL-DL-Configuration Common* and *tdd-UL-DL-ConfigurationDedicated;* and the dynamic uplink and downlink indication signaling is the DCI format 2_0.

The network configures a common slot format by sending the signaling *tdd-UL-DL-ConfigurationCommon,* and the common slot format is a slot format applicable to all terminal devices within the cell. The signaling may be used for configuring one or two patterns, and each pattern corresponds to one period. For each pattern, the network may configure a slot format in the pattern, mainly including the following parameters: a reference subcarrier spacing (denoted as µref), a period (denoted as P, i.e., the period parameter of the pattern having a unit of millisecond (ms)), the number of downlink slots (denoted as dslots), the number of downlink symbols (denoted as dsym), the number of uplink slots (denoted as uslots), and the number of uplink symbols (denoted as usym).

The signaling *tdd-UL-DL-ConfigurationDedicated* may change the direction of the flexible symbol configured by the *tdd-UL-DL-ConfigurationCommon.* When the downlink symbol (or the uplink symbol) has been configured by the configuration signaling *tdd-UL-DL-Configuration Common,* the downlink symbol (or the uplink symbol) is unable to be modified as the uplink symbol (or the downlink symbol) through the signaling *tdd-UL-DL-ConfigurationDedicated.*

On the basis of configuring the slot format through the semi-static uplink and downlink configuration information, the network may also dynamically configure the slot format of each slot through Slot Format Indicator (SFI). The SFI is the DCI format 2_0 and is scrambled by SFI-Radio Network Temporary Identifier (RNTI). The dynamic SFI signaling may configure only the direction of the flexible symbol configured by the semi-static uplink and downlink configuration information, and is unable to change the direction of the uplink symbol or the downlink symbol configured by the semi-static configuration information.

The dynamic SFI may simultaneously configure slot formats of multiple serving cells, and the network configures a cell index through Radio Resource Control (RRC) signaling, and configures a position of a starting bit of a slot format combination identifier (denoted as slotFormatCombinationId) corresponding to the cell index in the DCI format 2_0. The network configures multiple slot format combinations (denoted as slotFormatCombination), each slot format combination corresponds to one piece of identification information (denoted as slotFormatCombinationId) and slot format configurations of a group of slots, and each slot format configuration is used for configuring a slot format of one slot.

The SFI indication information includes an SFI index (denoted as SFI-index) corresponding to the *slotFormatCombinationId.* A group of slot formats may be determined according to the index. The slot formats indicated by the SFI are applicable to multiple consecutive slots starting from the slot carrying the SFI signaling, and the number of slots indicated by the SFI is greater than or equal to the monitoring period of the PDCCH carrying the SFI. If slot formats of one slot are indicated by two pieces of SFI signaling, the slot formats indicated by the two pieces of SFI signaling for this slot should be the same.

In order to further reduce the power consumption of the terminal device, the Standard Discussion Version 18 (R18) considers introducing a secondary receiver for the terminal device. The secondary receiver has characteristics of extremely low cost, extremely low complexity and extremely low power consumption.

With reference to a schematic structural diagram of a receiver system of a terminal device shown in FIG. 2, a primary receiver and a secondary receiver in the terminal device may share a set of radio frequency antennas. Under certain conditions, the terminal device may turn off the primary receiver, and receive the signals with low demodulation complexity through the secondary receiver, to implement communication with the network. If the network device requires the terminal device to turn on the primary receiver, a wake up signal may be sent to the secondary receiver, to indicate the terminal device to turn on the primary receiver. Specifically, after receiving the wake up signal for turning on the primary receiver, the secondary receiver may send indication information to the primary receiver, which indicates to turn on the primary receiver.

Exemplarily, the secondary receiver may be a Wake Up Receiver (WUR). Herein, the WUR may receive the Wake Up Signal (WUS). The WUS may be used for waking up the primary receiver in the terminal device. If the WUS indicates the terminal device to turn on the primary receiver, the secondary receiver may send wake up information to the primary receiver, which indicates to turn on the primary receiver. Otherwise, the primary receiver may be in the off state.

In addition, with the development of the communication technology, there are more and more application scenarios and terminals of the IoT. Moreover, the development of the communication technology will also have higher requirements for the price and power consumption of the terminals, especially, the application of the zero-power-consumption terminals with low power consumption, low complexity and low cost has become the key technology of the IoT. Based on this, the zero-power-consumption terminal is further introduced in the NR technology. The zero-power-consumption terminal has only a receiver with extremely low cost and complexity (that is similar to the secondary receiver or the WUR in the aforementioned embodiment), and the energy source of operation of the zero-power-consumption terminal may be the environment.

In the process of the standardization discussion, the zero-power-consumption terminal may also be referred to as an Ambient power enabled IoT (Ambient IoT) device. The Ambient IoT device refers to an IoT device that uses various ambient energy, such as wireless radio frequency energy, light energy, solar energy, thermal energy, mechanical energy and the like. Such device may have no energy storage capacity or have very limited energy storage capacity (for example, using a capacitor with a capacity of tens of uF).

The zero-power-consumption terminals may be classified into the following types based on their energy source and usage mode.

### 1) Passive zero-power-consumption terminal

A battery does not need to be provided in the zero-power-consumption terminal; and when the zero-power-consumption terminal approaches the network node (for example, a reader-writer of a Radio Frequency Identification (RFID) system), the zero-power-consumption terminal is within a near field range formed through radiation of an antenna of the network node. Therefore, an antenna of the zero-power-consumption terminal generates an induced current through electromagnetic induction, and then the induced current drives a low-power-consumption chip circuit of the zero-power-consumption terminal, so as to demodulate the forward link signal and modulate the backward link signal. For a backscatter link, the zero-power-consumption terminal implements the transmission of the signal by means of the backscatter.

Therefore, regardless of a forward link or a backward link, the passive zero-power-consumption terminal does not need to be driven by a built-in battery, so that the passive zero-power-consumption terminal is a true zero-power-consumption terminal.

The passive zero-power-consumption terminal does not need the battery, and an RF circuit and a baseband circuit thereof are very simple, for example, devices such as Low Noise Amplifier (LNA), PA, crystal oscillator, and Analog-to-Digital Converter (ADC) are not required, so that the passive zero-power-consumption terminal has various advantages of being small in size, light in weight, cheap in price, and long in service life.

### 2) Semi-passive zero-power-consumption terminal

The semi-passive zero-power-consumption terminal is also not provided with the conventional battery, but may use the energy harvesting module to harvest the ambient energy (for example, wireless radio frequency signal energy), and store the harvested energy in an energy storage unit (for example, a capacitor). After obtaining the energy, the energy storage unit may drive the low-power-consumption chip circuit of the zero-power-consumption terminal, so as to demodulate the forward link signal and modulate the backward link signal. For the backscatter link, the zero-power-consumption terminal implements the transmission of the signal by means of the backscatter or the active transmission.

Therefore, regardless of a forward link or a backward link, the semi-passive zero-power-consumption terminal does not need to be driven by a built-in battery, and although energy stored in the capacitor is used during operation, the energy is derived from the ambient energy harvested by the energy harvesting module, so that the semi-passive zero-power-consumption terminal is a true zero-power-consumption terminal.

The semi-passive zero-power-consumption terminal inherits various advantages of the passive zero-power-consumption terminal, so that the semi-passive zero-power-consumption terminal has various advantages of being small in size, light in weight, cheap in price, and long in service life.

### 3) Active zero-power-consumption terminal

In some scenarios, the zero-power-consumption terminal used may also be an active zero-power-consumption terminal, and the terminal may be provided with a built-in battery. The battery is configured to drive the low-power-consumption chip circuit of the zero-power-consumption terminal, so as to demodulate the forward link signal and modulate the backward link signal. However, for the backscatter link, the zero-power-consumption terminal implements the transmission of the signal by means of the backscatter or the active transmission. Although having the built-in battery, such active zero-power-consumption terminal has extremely low power consumption and complexity, so that such active zero-power-consumption terminal has a battery with smaller capacity, thereby implementing the smaller cost and smaller size. The built-in battery may also be used as the energy storage unit used for the energy harvesting module to store the harvested ambient energy, thereby implementing a longer maintenance period or even maintenance-free.

The built-in battery in the active zero-power-consumption terminal may supply power, to increase the communication distance of the zero-power-consumption terminal and improve the reliability of the communication. Therefore, the active zero-power-consumption terminal may be applied in some scenarios having relatively high requirements on communication distance, reading delay, etc.

The logistics and warehousing are typical scenarios to which the zero-power-consumption communication is applied. A large amount of goods are required to be frequently transferred, stored, loaded and unloaded and inventoried in the logistics station or warehouse. With the occurrence of warehouse ordering, goods warehousing, goods management and goods shipping, a large amount of warehousing information may be generated, and the information generally has the characteristics of frequent data reading operation and high delay requirement. The zero-power-consumption terminal itself has the characteristics of extremely low cost, small size, maintenance-free, durability, and long life and is especially suitable for recording, saving, and updating goods information in the logistics and warehousing. The construction of the zero-power-consumption IoT-based logistics and warehousing system can further reduce the operational expenditure, significantly improve the management efficiency of the logistics and warehousing, and contribute to implement the smart logistics and smart warehousing. In the zero-power-consumption terminal-based positioning scenario, the AP or the STA needs to read the information stored in the zero-power-consumption terminal, such as the positioning information stored in the zero-power-consumption terminal, so as to perform positioning through the positioning information reported by the zero-power-consumption terminal.

In practical applications, the terminal device needs to detect the downlink signal from the network device according to the slot format of the cell. That is to say, the terminal device detects the downlink signal on the downlink slot or the flexible slot, which leads to an increase in the delay for the terminal device to receive the downlink signal. Moreover, for terminal devices, such as the secondary receiver of traditional terminal device and the zero-power-consumption terminal with low complexity, low cost, and low power consumption, a relatively accurate clock is unable to be maintained, and thus the downlink signal is unable to be accurately received on the downlink slot or the flexible slot, which results in the missed detection of the downlink signal.

Based on this, the embodiments of the present disclosure provide the methods for signal transmission. The network device may send the first signal on the time unit configured for uplink transmission, and correspondingly, the terminal device may detect the first signal on the time unit configured to contain uplink transmission. In this way, the terminal device is able to detect the first signal on the time unit that is not originally used for detecting the first signal, which expands the transmission range and detection range of the first signal, thereby reducing the delay of detecting the first signal by the terminal device. In addition, even if the terminal device has the clock with low accuracy, the terminal device is able to detect the first signal in a larger detection range, which increases the possibility of the detection of the first signal, thereby avoiding the missed detection of the first signal to a certain extent.

For convenience of understanding the technical solutions of the embodiments of the present disclosure, the technical solutions in the present disclosure are described below through the detailed embodiments. The aforementioned related technologies, used as optional solutions, may be combined with the technical solutions of the embodiments of the present disclosure in various ways, and the combinations shall fall within the scope of the protection of the embodiments of the present disclosure. The embodiments of the present disclosure include at least some of the following contents.

FIG. 3 shows a method for signal transmission according to an embodiment of the present disclosure, and the method may include operation S110.

In operation S110, a terminal device detects a first signal on first time unit(s), where the first time unit is configured as a time unit containing uplink transmission.

It is to be understood that the first signal is a signal received by the terminal device. Exemplarily, the first signal may be a downlink signal sent by a network device, and the first signal may be a sidelink signal sent by another terminal device, which is not limited in the embodiments of the present disclosure.

In the wireless communication system, the time-domain resource may be temporally divided into multiple time units. The terminal device may perform data transmission in a unit of the time unit.

In some embodiments, the time-domain unit may be any one of: a slot, a mini slot, a time-domain symbol, or a set of time-domain symbols, which is not limited in the embodiments of the present disclosure.

In some embodiments, different time units may have different functions/types. The time unit may be an uplink time unit, a downlink time unit, a flexible time unit, or a full-duplex time unit.

It is to be understood that the uplink time unit may be used for uplink transmission, the downlink time unit may be used for downlink transmission, the flexible time unit may be configured to be used for uplink transmission or the downlink transmission, and the full-duplex time unit may be used for both the uplink transmission and the downlink transmission.

The full-duplex time unit is described in detail below.

The TDD is widely used in the NR deployment. In the TDD, the time-domain resources are allocated to the downlink transmission (or referred to as the downlink) and the uplink transmission (or referred to as the uplink). In the TDD, the allocation of limited time-domain resources for the uplink transmission may result in reduced coverage, increased delay, and reduced capacity. As a possible enhancement measure to the limitations of the traditional TDD operation, the Standard Conference Group began to investigate the feasibility of allowing both the downlink transmission and the uplink transmission to exist within legacy TDD bands, i.e., the full duplex transmission, more specifically, the feasibility of the subband nonoverlapping full duplex at the network device side (e.g., the base station), so as to provide enhanced the uplink coverage, reduce the delay, increase the system capacity and improve the configuration flexibility.

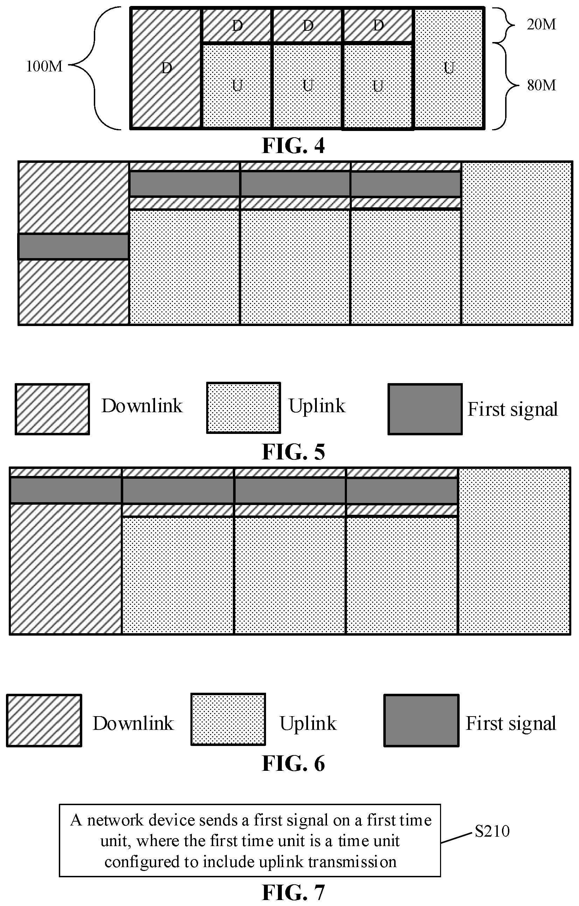

The main manner of implementing the full duplex at the network device side is the Subband Nonoverlapping Full Duplex (SBFD). Exemplarily, the time unit being the slot is taken as an example, reference is made to the first schematic diagram of a slot structure shown in FIG. 4. On the basis of the existing DUUUU slot format (including five slots, the first slot is allocated to the downlink transmission, and the second slot to the fifth slot are allocated to the uplink transmission), the frequency domain of the middle three uplink slots may be divided into two subbands of 20M and 80M that are respectively used for downlink transmission and the uplink transmission. In this way, the network device is able to implement the full duplex in the middle three slots. That is to say, the network device is able to simultaneously perform the uplink transmission and the downlink transmission in the middle three slots.

It is to be noted that the full-duplex time unit may also be referred to as an X time unit or an SBFD time unit.

In some embodiments, the function/type of the time unit may be configured by the network device. It is to be understood that the network device may configure the function/type of the time unit through the semi-static uplink and downlink configuration signaling *tdd-UL-DL-ConfigurationCommon* and *tdd-UL-DL-ConfigurationDedicated,* and the dynamic uplink and downlink indication signaling SFI.

Exemplarily, the terminal device in the Radio Resource Control (RRC) idle state or the RRC inactive state may receive the signaling *tdd-UL-DL-ConfigurationCommon* sent by the network device, to obtain the format configuration of the time unit. The format configuration of the time unit may include one or more of: a downlink (denoted as D) time unit, an uplink (denoted as U) time unit, a flexible (denoted as F) time unit, and an X time unit. In addition, the terminal device may further receive the signaling *tdd-UL-DL-ConfigurationDedicated* to change the direction of the flexible slot configured by the *tdd-UL-DL-ConfigurationCommon.*

Exemplarily, the terminal device in the RRC connection state may receive the SFI sent by the network device, to dynamically configure the function of each time unit.

It is to be noted that the transmission types of different time units may also be predefined in protocol(s). That is to say, the terminal device may agree with the network device which time units in the slot structure are used for uplink transmission, which time units in the slot structure are used for downlink transmission, which time units in the slot structure are flexible time units, and which time units in the slot structure are full-duplex time units.

In the embodiments of the present disclosure, the terminal device may detect the first signal on the first time unit. Herein, the first time unit is configured as a time unit containing uplink transmission.

It is to be noted that the time unit containing the uplink transmission may be a time unit where all frequency resources of the time unit are configured for uplink transmission, or a time unit where a part of the frequency resources in the time unit are configured for uplink transmission. In other words, as long as at least part of the frequency resources in the time unit are configured for uplink transmission, the time unit may be considered to be the time unit containing the uplink transmission.

In a possible implementation, all frequency-domain resources of the first time unit are configured for uplink transmission. That is to say, the first time unit may be a time unit configured for full uplink transmission (or referred to as an uplink time unit). Exemplarily, the first time unit may be an uplink slot or an uplink symbol.

It is to be noted that the terminal device may detect the first signal on all frequency-domain resources of the uplink time unit or may detect the first signal on a part of frequency-domain resources of the uplink time unit, which this is not limited in the embodiments of the present disclosure.

In another possible implementation, the part of the frequency-domain resources of the first time unit is configured for uplink transmission. Herein, the remaining frequency-domain resources of the first time unit may be configured for downlink transmission. That is to say, the first time unit may be a full-duplex time unit. Exemplarily, the first time unit may be the X slot or the X symbol.

It is to be noted that the terminal device may detect the first signal on all frequency-domain resources of the full-duplex time unit or may detect the first signal on a part of frequency-domain resources of the full-duplex time unit, which this is not limited in the embodiments of the present disclosure. Exemplarily, the terminal device may detect the first signal on a frequency-domain resource in the full-duplex time unit, which is used for downlink transmission.

In an example, the network device may configure the time unit as the uplink time unit, the downlink time unit, or the flexible time unit. Herein, the terminal device may detect the first signal on the uplink time unit.

In another example, the network device may configure the time unit as the uplink time unit, the downlink time unit, the flexible time unit, or the full-duplex time unit. Herein, the terminal device may detect the first signal on the full-duplex time unit, or detect the first signal on the uplink time unit and the full-duplex time unit.

It is to be understood that the transmission of the first signal that is a signal received by the terminal device should be performed on the downlink time unit or the flexible time unit. In other words, the terminal device should detect the first signal on the downlink time unit or the flexible time unit. In the embodiments of the present disclosure, the time unit for detecting the first signal may be extended. Herein, the network device may send the first signal on the time unit originally configured for uplink transmission, and correspondingly, the terminal device may detect the first signal on the time unit configured to include the uplink transmission. In this way, the terminal device is able to detect the first signal on the time unit that is not originally used for detecting the first signal, which expands the transmission range and detection range of the first signal, thereby reducing the delay of detecting the first signal by the terminal device. Moreover, even if the terminal device has the clock with low accuracy, the terminal device is able to detect the first signal in a larger detection range, which increases the possibility of the detection of the first signal, thereby avoiding the missed detection of the first signal to a certain extent.

In some embodiments, in order to further reduce the power consumption of the terminal device, the first signal may be a signal with lower detection complexity. Exemplarily, the first signal may be an envelope signal that is obtained by performing Amplitude Shift Keying (ASK) modulation on a carrier signal, a signal that is obtained by performing Frequency Shift Keying (FSK) modulation on the carrier signal, or a signal that is obtained by performing Phase Shift Keying (PSK) modulation on the carrier signal, and the like. Correspondingly, the first signal is a signal received based on at least one of the following manners: envelope detection, amplitude detection, frequency detection, or phase detection.

In some embodiments, the first signal may be a signal for waking up the terminal device. Exemplarily, the first signal may be the WUS, or a Low Power WUS (LP-WUS).

It is to be understood that the terminal device may be in a dormancy state and detect the WUS/LP-WUS in the dormancy state. After the terminal device detects the WUS/LP-WUS, the terminal device may exit the dormancy state to receive other signals. In this way, the power consumption of the terminal device can be reduced.

It is to be understood that the transmission of the WUS/LP-WUS, as a typical downlink signal, should be performed on the downlink time unit or the flexible time unit. In other words, the terminal device should detect the WUS/LP-WUS on the downlink time unit or the flexible time unit. In the embodiments of the present disclosure, the time unit for detecting the WUS/LP-WUS may be extended. That is to say, the terminal device may detect the WUS/LP-WUS on a time unit configured to include the uplink transmission, and may detect other signals on a downlink time unit and a flexible time unit after detecting the WUS/LP-WUS. Therefore, the terminal device does not have to implement the full duplex, and therefore, the self-interference problem caused by the full duplex does not exist when the terminal device detects the wake up signal.

In some embodiments, the terminal device may be a terminal having a primary receiver and a secondary receiver, such as a WUR. Exemplarily, the structure of the receiver system of the terminal device may be shown with reference to FIG. 2. Herein, the primary receiver of the terminal device may be in an off state, and since the secondary receiver has extremely low power consumption, it is not necessary to turn on and turn off the secondary receiver, as the primary receiver, to save power, but may continue to turn on the secondary receiver.

In the embodiments of the present disclosure, the terminal device may detect the first signal, through the secondary receiver, on the time unit (i.e., the aforementioned first time unit) configured to include the uplink transmission.

Exemplarily, the first signal in the embodiments may be the WUS/LP-WUS, and the terminal device detects the first signal on the first time unit through the secondary receiver to wake up the primary receiver of the terminal device.

Exemplarily, the first signal in the embodiments may be a signal carrying special information, and the terminal device detects the first signal on the first time unit through the secondary receiver to obtain information sent by the network device.

It is to be noted that since the primary transceiver of the terminal device is in the off state and only the secondary receiver is turned on to detect the first signal, the terminal device is not required to implement the full duplex, and there is no self-interference problem caused by the full duplex of the terminal device.

In some embodiments, the terminal device may be a terminal device having characteristics of low power consumption, low complexity, and low cost, etc. Such terminal with the low power consumption, low complexity, and low cost may be referred to as a zero-power-consumption terminal (for example, an Ambient Power (AMP) terminal using ambient power), a low-power-consumption terminal, a low-cost terminal, a low-capability terminal, or the like, which is not limited in the embodiments of the present disclosure. Herein, the zero-power-consumption terminal may include an ambient power enabled device, i.e., the AMP terminal. The ambient power may include wireless radio frequency energy, solar energy, thermal energy, mechanical energy, and the like. From the perspective of the energy harvesting, the zero-power-consumption terminal may also be referred to as an energy harvesting device.

In the embodiment, the terminal device may detect the first signal with the low complexity on the time unit (i.e., the aforementioned first time unit) configured to include the uplink transmission. The power consumption of the terminal device can be further reduced.

Exemplarily, the first signal in the embodiment may be the WUS/LP-WUS, or referred to as a power-supply signal.

Exemplarily, the first signal in the embodiment may be a signal carrying special information, and the terminal device may detect the first signal on the first time unit to obtain information sent by the network device.

In some embodiments, the first time units may include multiple first time units. Herein, the terminal device may detect the first signal on a part of the multiple first time units.

It is to be understood that the terminal device does not need to detect the first signal on each time unit, but only detects the first signal on the part of the first time units, thereby reducing the detection complexity of the terminal device and the power consumption generated by detecting the first signal.

In some embodiments, the part of the first time units is determined based on one or more of:
a preset rule;
first configuration information sent by the network device; and
predefinition in a protocol.

In a possible implementation, the part of the first time units may be determined by the terminal device according to a preset rule. Exemplarily, the terminal device may determine the part of the first time units according to parameters, such as, a period of the first signal and a transmission resource for the first signal.

It is to be understood that the network device may configure the transmission resources for the first signal and/or the transmission period of the first signal in advance. The network device may determine the transmission opportunity of the first signal according to the transmission resources for the first signal and/or the transmission period of the first signal. Herein, the first time unit occupied by the transmission opportunity of the first signal is the time unit on which the terminal device detects the first signal. That is to say, the part of the first time units on which the terminal device detects the first signal may be the first time unit occupied by the transmission opportunity of the first signal. It is to be noted that the first time unit occupied by the transmission opportunity of the first signal may also be referred to as a valid first time unit.

In another possible implementation, the terminal device may receive the first configuration information sent by the network device. Herein, the first configuration information may configure the part of the first time units for detecting the first signal.

Exemplarily, the first configuration information may be sent to the terminal device together with the configuration information of the transmission resources for the first signal configured by the network device. Herein, the first configuration information may be carried by high level signaling (for example, the RRC signaling) or physical layer signaling (for example, the DCI), which is not limited in the embodiments of the present disclosure.

Exemplarily, in a case where the terminal device is the terminal device having the primary receiver and the secondary receiver, the terminal device may receive the first configuration information through the primary receiver, and detect the first signal through the secondary receiver on the part of the first time units configured by the first configuration information after the primary receiver is in the dormancy state.

Exemplarily, when the terminal device is any one of the low-power-consumption terminal, the low-cost terminal, and the low-capability terminal, the terminal device may acquire the first configuration information through the power-supply signal.

In another possible implementation, the part of the first time units on which the terminal device detects the first signal may also be predefined in the protocol. Exemplarily, the terminal device may detect the first signal on an uplink slot having a slot index value that is an odd value, or the terminal device may detect the first signal on a full-duplex slot having a slot index value that is an even value.

In some embodiments, the operation S110 that the terminal device detects the first signal on the first time unit may be implemented in the following manner.

The terminal device detects the first signal on a first frequency-domain resource of the first time unit.

The first frequency-domain resource may be all frequency-domain resources of the first time unit, or may be a part of frequency-domain resource of the first time unit. That is to say, the terminal device may detect the first signal on all frequency-domain resources of the first time unit or may detect the first signal on a part of frequency-domain resources of the first time unit, which this is not limited in the embodiments of the present disclosure.

In some embodiments, the part of the frequency-domain resources may be determined based on one or more of:
a preset rule;
second configuration information sent by the network device; and
predefinition in a protocol.

In a possible implementation, the first frequency-domain resource may be determined by the terminal device according to the preset rule. Exemplarily, according to the frequency-domain resources of the downlink time unit or the flexible time unit that are used for detecting the first signal, the terminal device may determine the first frequency-domain resource of the first time unit, which is used for detecting the first signal. For example, the frequency-domain resource of the downlink time unit or the flexible time unit on which the terminal device detects the first signal is the same as the first frequency-domain resource, or is separated by a preset frequency-domain interval from the first frequency-domain resource.

In another possible implementation, the terminal device may receive second configuration information sent by the network device, and the second configuration information may be used for configuring the first frequency-domain resource on which the terminal device detects the first signal.

Exemplarily, the second configuration information may be sent to the terminal device together with the configuration information of the transmission resource for the first signal configured by the network device. Herein, the second configuration information may be carried by high level signaling (for example, the RRC signaling) or physical layer signaling (for example, the DCI), which is not limited in the embodiments of the present disclosure.

Exemplarily, in a case where the terminal device is the terminal device having the primary receiver and the secondary receiver, the terminal device may receive the second configuration information through the primary receiver, and detect the first signal through the secondary receiver on the first frequency-domain resource configured by the second configuration information after the primary receiver is in the dormancy state.

Exemplarily, when the terminal device is any one of the low-power-consumption terminal, the low-cost terminal, and the low-capability terminal, the terminal device may acquire the second configuration information through the power-supply signal.

It is to be noted that the second configuration information may be the same as or different from the first configuration information, which is not limited in the embodiment of the present disclosure.

In another possible implementation, the first frequency-domain resource may also be predefined in the protocol. Exemplarily, the first frequency-domain resource may be a resource with a bandwidth of 20M located in the vicinity of a center frequency band among the frequency-domain resources corresponding to the first time unit, or the first frequency-domain resource may be a resource with the bandwidth of 20M located in the vicinity of a lowest frequency point among the frequency-domain resources corresponding to the first unit.

In some embodiments, in addition to detecting the first signal on the first time unit, the terminal device may detect the first signal on a second time unit. The second time unit is configured as a time unit for downlink transmission, or configured as a flexible time unit.

That is to say, in the method for signal transmission provided in the embodiments of the present disclosure, the type of the time unit for detecting the first signal is expanded. The terminal device may detect the first signal on the time unit configured to include the uplink transmission (i.e., the first time unit including the uplink time unit and the full-duplex time unit), in addition to detecting the first signal on the originally existing downlink time unit or flexible time unit (i.e. the second time unit).

In this way, the terminal device is able to detect the first signal on the time unit that is not originally used for detecting the first signal, which expands the transmission range and detection range of the first signal, thereby reducing the delay of detecting the first signal by the terminal device. In addition, even if the terminal device has the clock with low accuracy, the terminal device is able to detect the first signal in a larger detection range, which increases the possibility of the detection of the first signal, thereby avoiding the missed detection of the first signal to a certain extent.

In some embodiments, the terminal device detects the first signal on a second frequency-domain resource of the second time unit. The second frequency-domain resource is the same as the first frequency-domain resource or different from the first frequency-domain resource. The first frequency-domain resource is a frequency-domain resource in the first time unit, which is used for detecting the first signal.

In a possible implementation, since the first time unit and the second time unit have different functions/types, the first frequency-domain resource of the first time unit on which the terminal device detects the first signal may be different from the second frequency-domain resource of the second time unit on which the terminal device detects the first signal.

It is to be noted that the difference between the first frequency-domain resource and the second frequency-domain resource may be that the frequency-domain position and/or bandwidth of the first frequency-domain resource is different from the frequency-domain position and/or bandwidth of the second frequency-domain resource.

Exemplarily, with reference to the second schematic diagram of the slot structure shown in FIG. 5, the slot structure includes five slots. The first slot is a downlink slot, the second slot to the fourth slot are X slots, and the fifth slot is an uplink slot. The frequency domain of each X slot may be divided into two subbands of 20M and 80M. The subband of 20M is allocated to the downlink transmission and the subband of 80M is allocated to the uplink transmission. As can be seen, for the downlink transmission, the frequency-domain resource available in the downlink slot is different from the frequency-domain resource available in the X slot are different. Frequency-domain resources on which the terminal device detects the first signal may be different for the downlink slot and the X slot. Specifically, the terminal device detects the first signal on a subband in the vicinity of the center frequency point of the downlink slot, and detects the first signal on a subband of 20M allocated to the downlink transmission in the X slot.

In another possible implementation, the first frequency-domain resource of the the first time unit on which the terminal device detects the first signal may be the same as the second frequency-domain resource of the second time unit on which the terminal device detects the first signal. In this way, the complexity of receiving the first signal can be reduced, for example, the frequent adjustment of the bandwidth of the receiving filter of the receiver can be avoided, thereby further reducing the power consumption of the terminal device.

It is to be noted that the first frequency-domain resource being the same as the second frequency-domain resource may mean that the frequency-domain position and bandwidth of the first frequency-domain resource are the same as the frequency-domain position and bandwidth of the second frequency-domain resource.

Exemplarily, with reference to the third schematic diagram of the slot structure shown in FIG. 6, the slot structure includes five slots. The first slot is a downlink slot, the second slot to the fourth slot are X slots, and the fifth slot is an uplink slot. The frequency domain of each X slot may be divided into two subbands of 20M and 80M. The subband of 20M is allocated to the downlink transmission and the subband of 80M is allocated to the uplink transmission. With reference to FIG. 6, the terminal device may detect the first signal on the same frequency-domain resource of the downlink slot and the X slot.

The method for signal transmission according to the embodiments of the present disclosure is described in detail above from the perspective of the terminal device with reference to FIG. 3, and the method for signal transmission according to the embodiments of the present disclosure will be described in detail below from the perspective of the network device with reference to FIG. 7. It is to be understood that the operations performed by the network device correspond to the operations performed by the terminal, and repeated descriptions will be omitted appropriately for the sake of brevity.

FIG. 7 shows a method for signal transmission according to an embodiment of the present disclosure, and the method may include operation S210.

In operation S210, a network device sends a first signal on first time unit(s), where the first time unit is configured as a time unit containing uplink transmission.

In the wireless communication system, the time-domain resource may be temporally divided into multiple time units. The network device may perform data transmission in a unit of the time unit.

In the embodiments of the present disclosure, the network device may send the first signal on the first time unit. Herein, the first time unit is configured as a time unit containing uplink transmission.

In an example, the network device may configure the time unit as an uplink time unit, a downlink time unit, or a flexible time unit. Herein, the terminal device may detect the first signal on the uplink time unit.

In another example, the network device may configure the time unit as an uplink time unit, a downlink time unit, a flexible time unit, or a full-duplex time unit. Herein, the terminal device may detect the first signal on the full-duplex time unit, or detect the first signal on the uplink time unit and the full-duplex time unit.

It is to be understood that the transmission of the first signal, as a signal received by the terminal device, should be performed on the downlink time unit or the flexible time unit. In other words, the terminal device should detect the first signal on the downlink time unit or the flexible time unit. In the embodiments of the present disclosure, the time unit for detecting the first signal may be extended. Herein, the network device may send the first signal on the time unit originally configured for uplink transmission, and correspondingly, the terminal device may detect the first signal on the time unit configured to include the uplink transmission. In this way, the terminal device is able to detect the first signal on the time unit that is not originally used for detecting the first signal, which expands the transmission range and detection range of the first signal, thereby reducing the delay of detecting the first signal by the terminal device. Moreover, even if the terminal device has the clock with low accuracy, the terminal device is able to detect the first signal in a larger detection range, which increases the possibility of the detection of the first signal, thereby avoiding the missed detection of the first signal to a certain extent.

In some embodiments, all frequency-domain resources of the first time unit are configured for uplink transmission.

In other embodiments, a part of frequency-domain resources of the first time unit are configured to be used for uplink transmission. The remaining frequency-domain resources of the first time unit are configured to be used for downlink transmission.

In some embodiments, the first time units include multiple first time units, and the network device may send the first signal on a part of the multiple first time units.

In some embodiments, the part of the first time units is determined based on one or more of:
a preset rule;
first configuration information sent by the network device; and
predefinition in a protocol.

In some embodiments, the part of the first time units is first time units occupied by a transmission opportunity of the first signal among the multiple first time units.

In some embodiments, the operation S210 that the network device sends the first signal on the first time unit(s) may be implemented in the following manner.

The network device sends the first signal on a first frequency-domain resource of the first time unit.

In some embodiments, the part of frequency-domain resources are determined based on one or more of:
a preset rule;
second configuration information sent by the network device; and
predefinition in a protocol.

In some embodiments, the network device sends the first signal on a second time unit. The second time unit is configured as a time unit for downlink transmission, or configured as a flexible time unit.

In some embodiments, the network device sends the first signal on a second frequency-domain resource of the second time unit. The second frequency-domain resource is the same as the first frequency-domain resource or different from the first frequency-domain resource. The first frequency-domain resource is a frequency-domain resource in the first time unit, which is used for sending the first signal.

In some embodiments, the first time unit is any one of:
a slot, a mini slot, a time-domain symbol, or a set of time-domain symbols.

In some embodiments, the first signal may be used for waking up the terminal device.

In some embodiments, the first signal is a signal received based on at least one of the following manners: envelope detection, amplitude detection, frequency detection, or phase detection.

In some embodiments, the terminal device receiving the first signal is one or more of: a zero-power-consumption terminal, a low-power-consumption terminal, a low-cost terminal, and a low-capability terminal.

It is to be noted that if the terminal device is a terminal having the primary receiver and the secondary receiver, the terminal device detects the first signal through the secondary receiver.

The method for signal transmission provided by the embodiments of the present disclosure is described in detail below by taking the first signal as the WUS signal as an example in combination with specific application scenarios.

The transmission of the WUS signal, as a downlink signal, should be performed in the downlink slot or the flexible slot. In the method for signal transmission according to the embodiments of the present disclosure, the type of transmission slot of the WUS signal may be expanded. Herein, the WUS signal may be sent in the uplink slot or the full-duplex slot by using the full duplex at the network device side. Correspondingly, when the WUR of the terminal device detects the WUS, the WUS may be detected in the uplink slot or the full-duplex slot.

Herein, the full-duplex slot refers to a slot where the network device is able to simultaneously perform the downlink transmission and the uplink transmission, or a slot where the network device is able to implement the full duplex through the SBFD. Such type of slot may be referred to as the X slot, or the SBFD slot.

The slot for the transmission of the WUS is described in detail below.

In some embodiments, the slot format may be determined through the semi-static uplink and downlink configuration signaling: signaling *tdd-UL-DL-ConfigurationCommon* and signaling *tdd-UL-DL-ConfigurationDedicated,* and through the dynamic signaling SFI. The slot format configured by the network device may include a downlink (denoted as the D) slot, an uplink (denoted as the U) slot, and a flexible (denoted as the F) slot. Herein, the transmission of the WUS may be performed in the D slot, the F slot and the U slot. Correspondingly, the terminal device may detect the WUS in the D slot, the F slot and the U slot according to the slot format.

In other embodiments, the slot format may be determined through the semi-static uplink and downlink configuration signaling: signaling *tdd-UL-DL-ConfigurationCommon* and signaling *tdd-UL-DL-ConfigurationDedicated,* and through the dynamic signaling SFI. The slot format configured by the network device may include the D slot, the F slot, the U slot and the X slot. Herein, the transmission of the WUS may be performed in the D slot, the F slot and the X slot. Correspondingly, the terminal device may detect the WUS in the D slot, the F slot and the X slot according to the slot format.

It is to be noted that the transmission of the WUS may be performed on a part of slots among the U slots/X slots, and the part of the slots may be determined according to a preset rule, configured by a network device, or predefined in a protocol.

Exemplarily, if the transmission opportunities of the WUS are periodic, the transmission opportunities of the WUS are valid transmission opportunities when the transmission opportunities of the WUS are located in the D slot, the F slot, and the X slot. The terminal device is able to detect the WUS on these transmission opportunities.

It is also to be noted that the transmission of the WUS may also be performed on a part of symbols of the U slot/X slot. The part of the slots may be determined according to a preset rule, configured by a network device, or predefined in a protocol.

Exemplarily, the transmission of the WUS may be performed in the part of the symbols of the X slot. On these symbols, the network device implements the full-duplex transmission through the SBFD.

The frequency-domain resource for the transmission of the WUS is described in detail below.

In some embodiments, in the X slot, different subbands in the frequency-domain bandwidth are respectively used for downlink transmission and uplink transmission in the SBFD technology. Therefore, for the downlink transmission, the frequency-domain resource in the X slot that is used for the transmission of the WUS is different from the frequency-domain resource in the D slot/F slot that is used for the transmission of the WUS. The bandwidth and/or the frequency-domain position of the frequency-domain resource in the X slot that is used for the transmission of the WUS is different from the bandwidth and/or the frequency-domain position of the frequency-domain resource in the D slot/F slot that is used for the transmission of the WUS. The frequency-domain resource in the X slot for the transmission of the WUS may be determined according to a predefined rule or through an indication of signaling.

In some embodiments, in different types of slots, frequency-domain resources for the transmission of the WUS may also have the same bandwidth or frequency-domain position. Exemplarily, the transmission of the WUS is performed in the downlink subband of the X slot and the transmission of the WUS is performed in the same subband of the D slot or the F slot, it is possible to ensure that the target frequency-domain resource for the transmission of the WUS have the same bandwidth or frequency-domain position. In this way, the complexity of receiving the WUS can be reduced, for example, the adjustment of the bandwidth of the receiving filter of the receiver can be avoided.

In summary, in the method for signal transmission according to the embodiments of the present disclosure, the WUS can be sent in a subband in the uplink slot/X slot by using the full duplex at the base station side. When the WUR of the terminal device detects the WUS, the WUS may be detected in the corresponding subband in the uplink slot/X slot. In this way, the transmission delay of the WUS can be reduced, and the accuracy requirement of the local clock of the WUR can also be reduced. Since the primary transceiver of the terminal device is in the off state and only the WUR is turned on for reception, the terminal device is not required to implement the full duplex, and there is no self-interference problem caused by the full duplex of the terminal.

Preferred implementations of the present disclosure have been described in detail above with reference to the accompanying drawings. However, the present disclosure is not limited to the specific details of the aforementioned implementations. Within the scope of the technical conception of the present disclosure, a variety of simple modifications may be made to the technical solution of the present disclosure, and such simple modifications shall fall within the scope of protection of the present disclosure. For example, various specific technical features described in the aforementioned specific embodiments may be combined in any suitable manner without contradiction, and various possible combinations are not further described in the present disclosure, in order to avoid unnecessary repetition. For another example, any combination may be made between various implementations of the present disclosure, as long as the combination does not depart from the idea of the present disclosure, and the combinations shall also be considered as the contents of the present disclosure. For another example, on the premise of no conflict, various embodiments described in the present disclosure and/or the technical features in the various embodiments may be combined with the related art in any manner. The technical solutions obtained after the combination shall also fall within the scope of protection of the present disclosure.

It is further to be understood that in various method embodiments of the present disclosure, the sequence number(s) of the above processes do not imply the sequence(s) of execution, and the sequence of execution of each process should be determined according to the functions and internal logic thereof, and should not constitute any limitation on the implementation process of the embodiments of the present disclosure. In addition, in the embodiments of the present disclosure, the term "and/or" is only an association relationship describing associated objects and represents that three relationships may exist. Specifically, A and/or B may represent three conditions: i.e., independent existence of A, existence of both A and B and independent existence of B. In addition, the character "/" in the present disclosure generally indicates that the relationship between the related objects is "or".

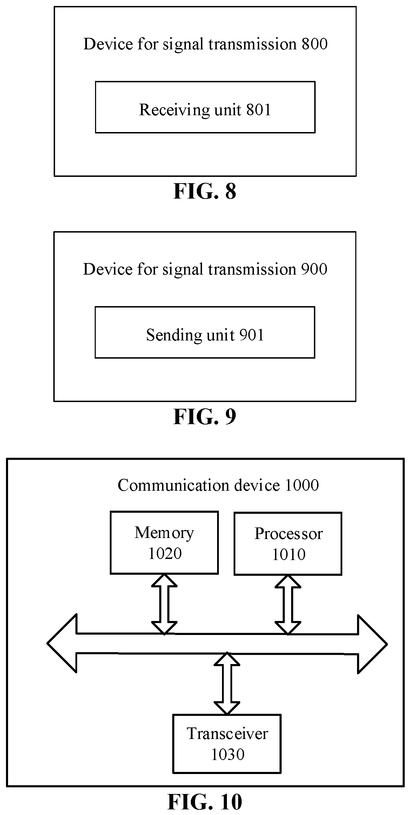

FIG. 8 is a schematic structural diagram of a device 800 for signal transmission according to an embodiment of the present disclosure. The device 800 for signal transmission is applied to the terminal device, and includes a receiving unit 801, as shown in FIG. 8.

The receiving unit 801 is configured to detect a first signal on first time unit(s), where the first time unit is configured as a time unit containing uplink transmission.

In some embodiments, all frequency-domain resources of the first time unit are configured to be used for uplink transmission.

In some embodiments, a part of frequency-domain resources of the first time unit are configured to be used for uplink transmission, and remaining frequency-domain resources of the first time unit are configured to be used for downlink transmission.

In some embodiments, the first time unit(s) include multiple first time units, and the receiving unit 801 is further configured to detect the first signal on a part of the multiple first time units.

In some embodiments, the part of the first time units is determined based on one or more of:
a preset rule;
first configuration information sent by a network device; and
predefinition in a protocol.

In some embodiments, the part of the first time unit is a first time unit occupied by a transmission opportunity of the first signal among the multiple first time units.

In some embodiments, the receiving unit 801 is further configured to detect the first signal on a first frequency-domain resource of the first time unit.

In some embodiments, the first frequency-domain resource is determined based on one or more of:
a preset rule;
second configuration information sent by a network device; and
predefinition in a protocol.

In some embodiments, the receiving unit 801 is further configured to detect the first signal on a second time unit, where the second time unit is configured as a time unit used for downlink transmission, or configured as a flexible time unit.

In some embodiments, the terminal device detects the first signal on a second frequency-domain resource of the second time unit, where the second frequency-domain resource is the same as the first frequency-domain resource or different from the first frequency-domain resource, and the first frequency-domain resource is a frequency-domain resource in the first time unit, which is used for detecting the first signal.

In some embodiments, the first time unit is any one of:
a slot, a mini slot, a time-domain symbol, or a set of time-domain symbols.

In some embodiments, the first signal is used for waking up the terminal device.

In some embodiments, the first signal is a signal received based on one or more of: envelope detection, amplitude detection, frequency detection, and phase detection.

In some embodiments, the terminal device is one or more of: a terminal having a primary receiver and a secondary receiver, a zero-power-consumption terminal, a low-power-consumption terminal, a low-cost terminal, and a low-capability terminal.

Herein, when the terminal device is the terminal having the primary receiver and the secondary receiver, the terminal device detects the first signal through the secondary receiver.

FIG. 9 is a schematic structural diagram of a device 900 for signal transmission according to an embodiment of the present disclosure. The device 900 for signal transmission is applied to the network device, and includes a sending unit 901, as shown in FIG. 9.

The sending unit 901 is configured to send a first signal on first time unit(s), where the first time unit is configured as a time unit containing uplink transmission.

In some embodiments, all frequency-domain resources of the first time unit are configured to be used for uplink transmission.

In some embodiments, a part of frequency-domain resources of the first time unit are configured to be used for uplink transmission, and remaining frequency-domain resources of the first time unit are configured to be used for downlink transmission.

In some embodiments, the first time unit(s) include multiple first time units, and the sending unit 901 is further configured to send the first signal on a part of the multiple first time units.

In some embodiments, the part of the first time units is determined based on one or more of:
a preset rule;
first configuration information sent by a network device; and
predefinition in a protocol.

In some embodiments, the part of the first time unit is a first time unit occupied by a transmission opportunity of the first signal among the multiple first time units.

In some embodiments, the sending unit 901 is further configured to send the first signal on a first frequency-domain resource of the first time unit.

In some embodiments, the first frequency-domain resource is determined based on one or more of:
a preset rule;
second configuration information sent by a network device; and
predefinition in a protocol.

In some embodiments, the sending unit 901 is further configured to send the first signal on a second time unit, where the second time unit is configured as a time unit used for downlink transmission, or configured as a flexible time unit.

In some embodiments, the network device sends the first signal on a second frequency-domain resource of the second time unit, where the second frequency-domain resource is the same as the first frequency-domain resource or different from the first frequency-domain resource, and the first frequency-domain resource is a frequency-domain resource in the first time unit, which is used for sending the first signal.

In some embodiments, the first time unit is any one of:
a slot, a mini slot, a time-domain symbol, or a set of time-domain symbols.

In some embodiments, the first signal may be used for waking up a terminal device.

In some embodiments, the first signal is a signal received based on one or more of: envelope detection, amplitude detection, frequency detection, and phase detection.

In some embodiments, the terminal device receiving the first signal is one or more of: a terminal having a primary receiver and a secondary receiver, a zero-power-consumption terminal, a low-power-consumption terminal, a low-cost terminal, and a low-capability terminal.

Herein when the terminal device is the terminal having the primary receiver and the secondary receiver, the terminal device detects the first signal through the secondary receiver.

Those skilled in the art will appreciate that the related descriptions of the aforementioned device for signal transmission in the embodiments of the present disclosure may be understood with reference to the descriptions of the aforementioned method for signal transmission in the embodiments of the present disclosure.

FIG. 10 is a schematic structural diagram of a communication device 1000 according to an embodiment of the present disclosure. The communication device may be a terminal device or a network device. The communication device 1000 illustrated in FIG. 10 includes a processor 1010. The processor 1010 may be configured to call and run a computer program stored in a memory to perform each of the methods according to the embodiments of the present disclosure.

Optionally, as illustrated in FIG. 18, the communication device 1000 may further include a memory 1020. Herein, the processor 1010 may be configured to call and run the computer program stored in the memory 1020 to perform each of the methods according to the embodiments of the present disclosure.

Herein, the memory 1020 may be a separate device independent of the processor 1010, or may be integrated into the processor 1010.

Optionally, as illustrated in FIG. 10, the communication device 1000 may further include a transceiver 1030. The processor 1010 may control the transceiver 1030 to communicate with other devices. Specifically, the transceiver 1430 may transmit information or data to other devices, or receive information or data from other devices.

Herein, the transceiver 1030 may include a transmitter and a receiver. The transceiver 1030 may further include one or more antennas.

Optionally, the communication device 1000 may specifically be the network device in the embodiments of the present disclosure. The communication device 1000 may implement corresponding processes that are implemented by the network device in each of the methods in the embodiments of the present disclosure. For brevity, details are not elaborated herein again.

Optionally, the communication device 1000 may specifically be the mobile terminal/terminal device in the embodiments of the present disclosure. The communication device 1000 may implement corresponding processes that are implemented by the mobile terminal/terminal device in each of the methods in the embodiments of the present disclosure. For brevity, details are not elaborated herein again.

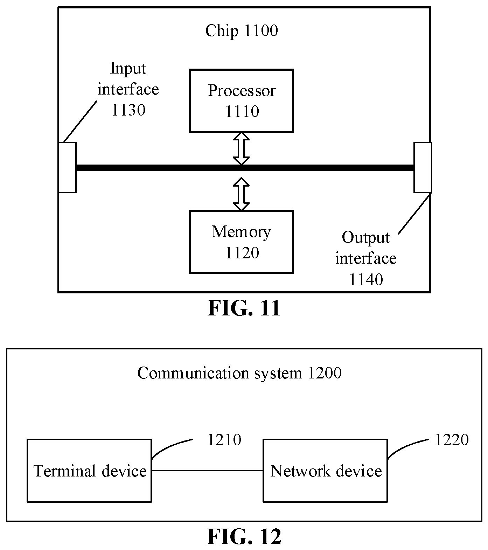

FIG. 11 is a schematic structural diagram of a chip according to an embodiment of the present disclosure. The chip 1100 illustrated in FIG. 11 includes a processor 1110. The processor 1110 may be configured to call and run a computer program stored in a memory to perform each of the methods according to the embodiments of the present disclosure.

Optionally, as illustrated in FIG. 11, the chip 1100 may further include a memory 1120. Herein, the processor 1110 may be configured to call and run the computer program stored in the memory 1120 to perform each of the methods according to the embodiments of the present disclosure.

Herein, the memory 1120 may be a separate device independent of the processor 1110, or may be integrated into the processor 1110.

Optionally, the chip 1100 may further include an input interface 1130. Herein, the processor 1110 may control the input interface 1130 to communicate with other devices or chips. Specifically, the input interface 1130 may obtain information or data from other devices or chips.

Optionally, the chip 1100 may further include an output interface 1140. Herein, the processor 1110 may control the output interface 1140 to communicate with other devices or chips. Specifically, the output interface 1140 may output information or data to other devices or chips.

Optionally, the chip may be applied to the network device in the embodiments of the present disclosure. The chip may implement the corresponding processes implemented by the network device in each of the methods in the embodiments of the present disclosure. For brevity, details are not elaborated herein again.

Optionally, the chip may be applied to the mobile terminal/terminal device in the embodiments of the present disclosure. The chip may implement the corresponding processes implemented by the mobile terminal/terminal device in each of the methods in the embodiments of the present disclosure. For brevity, details are not elaborated herein again.

It should be understood that, the chip referred to in the embodiments of the present disclosure may also be referred to as a system-level chip, a system chip, a chip system, or a system-on-chip, etc.

The embodiment of the present disclosure further provides a computer storage medium. The computer storage medium stores one or more programs executable by one or more processors to implement the method in the embodiments of the present disclosure

FIG. 12 is a schematic block diagram of a communication system 1200 according to an embodiment of the present disclosure. As illustrated in FIG. 12, the communication system 1200 includes a terminal device 1210 and a network device 1220.

Herein, the terminal device 1210 may be configured to implement the corresponding functions implemented by the terminal device in the foregoing methods. The network device 1220 may be configured to implement the corresponding functions implemented by the network device in the foregoing methods. For brevity, details are not elaborated herein again.

It is to be understood that the processor in the embodiments of the present disclosure may be an integrated circuit chip with signal processing capacity. In the implementation process, various operations of the above method embodiments may be completed by integrated logic circuits of hardware in the processor or instructions in the form of software. The above processor may be a general-purpose processor, a Digital Signal Processor (DSP), an Application Specific Integrated Circuit (ASIC), a Field Programmable Gate Array (FPGA), or other programmable logic devices, discrete gate or transistor logic devices, and discrete hardware components. Various methods, steps, and logical block diagrams disclosed in the embodiments of the disclosure may be implemented or performed. The general-purpose processor may be a microprocessor, any conventional processor, or the like. Steps of the methods disclosed with reference to the embodiments of the disclosure may be directly performed and accomplished by a hardware decoding processor, or may be performed and accomplished by a combination of hardware and software modules in the decoding processor. The software modules may be located in a mature storage medium in the art, such as a random access memory, a flash memory, a read-only memory, a programmable read-only memory or electrically erasable programmable memory, or a register. The storage medium is located in the memory, and the processor reads information in the memory and completes the steps in the foregoing methods in combination with hardware of the processor.

It is to be understood that the memory in the embodiments of the present disclosure may be a volatile memory or a non-volatile memory, or may include both the volatile memory and the non-volatile memory. The non-volatile memory may be an ROM, a Programmable ROM (PROM), an Erasable PROM (EPROM), an Electrically EPROM (EEPROM) or a flash memory. The volatile memory may be a Random Access Memory (RAM) and is used as an external highspeed cache. It is exemplarily but unlimitedly described that RAMs in various forms may be adopted, such as a static RAM (SRAM), a dynamic RAM (DRAM), a Synchronous DDRAM (SDRAM), a double data rate SDRAM (DDR SDRAM), an Enhanced SDRAM (ESDRAM), a Synchlink DRAM (SLDRAM) and a Direct Rambus RAM (DR RAM). It is to be noted that the memory of the systems and methods described in this specification includes but is not limited to these and any other proper types of memories.

It is to be understood that the abovementioned memories are exemplary but not restrictive, for example, the memory in the embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM). That is to say, the memories described in the embodiment of the disclosure are intended to include, but not limited to, these and any other suitable types of memories.

An embodiment of the present disclosure further provides a computer-readable storage medium configured to store a computer program.

Optionally, the computer-readable storage medium may be applied to the network device in the embodiments of the present disclosure, and the computer program causes a computer to perform the corresponding processes performed by the network device in various methods of the embodiments of the present disclosure. For brevity, details are not elaborated herein again.

Optionally, the computer-readable storage medium may be applied to the mobile terminal/terminal device in the embodiments of the present disclosure, and the computer program causes a computer to perform the corresponding processes performed by the mobile terminal/terminal device in various methods of the embodiments of the present disclosure. For brevity, details are not described herein again.

An embodiment of the present disclosure further provides a computer program product, which includes computer program instructions.

Optionally, the computer program product may be applied to the network device in the embodiments of the present disclosure, and the computer program instructions cause a computer to perform the corresponding processes performed by the network device in various methods of the embodiments of the present disclosure. For brevity, details are not elaborated herein again.

Optionally, the computer program product may be applied to the mobile terminal/terminal device in the embodiments of the present disclosure, and the computer program instructions cause a computer to perform the corresponding processes performed by the mobile terminal/terminal device in various methods of the embodiments of the present disclosure. For brevity, details are not described herein again.

An embodiment of the present disclosure further provides a computer program.

Optionally, the computer program may be applied to the network device in the embodiments of the present disclosure, and the computer program, when is run on a computer, causes the computer to perform the corresponding processes performed by the network device in various methods of the embodiments of the present disclosure. For brevity, details are not elaborated herein again.

Optionally, the computer program may be applied to the mobile terminal/terminal device in the embodiments of the present disclosure, and the computer program, when is run on a computer, causes the computer to perform the corresponding processes performed by the mobile terminal/terminal device in various methods of the embodiments of the present disclosure. For brevity, details are not described herein again.

Those of ordinary skill in the art may realize that units and algorithm steps of various examples described in combination with the embodiments disclosed herein may be implemented by electronic hardware, or a combination of computer software and electronic hardware. Whether the functions are executed in a hardware or software manner depends on specific applications and design constraints of the technical solutions. Professionals may implement the described functions for each specific application by using different methods, but such implementations shall not be regarded as outside the scope of the present disclosure.

It may be clearly understood by those skilled in the art that, for the specific working processes of the aforementioned systems, apparatuses and units, reference may be made to the corresponding processes in the aforementioned method embodiments, and such specific working processes of the systems, devices and units are not described herein again for the purpose of convenient and brief description

In the several embodiments provided in the present disclosure, it is to be understood that the disclosed systems, devices and method may be implemented in other modes. For example, the device embodiments described above are only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments of the present disclosure.

In addition, functional units in various embodiments of the disclosure may be integrated into one processing unit, or each of the units may be physically separated, or two or more units may be integrated into one unit.

If the function is implemented in the form of a software functional unit and sold or used as an independent product, it may also be stored in a computer-readable storage medium. Based on this understanding, the technical solutions of the disclosure essentially or the parts that contribute to the prior art, or part of the technical solutions can be embodied in the form of a software product. The computer software product is stored in a storage medium, including multiple instructions for causing a computer device (which may be a personal computer, a server, or a network device, and the like) to execute all or part of the steps of the methods described in various embodiments of the disclosure. The aforementioned storage medium includes various media capable of storing a program code such as a USB disk, a mobile hard drive disk, a Read-Only Memory (ROM), a Random Access Memory (RAM), a magnetic disk or an optical disk.

The above are only the specific implementations of the present disclosure, but the scope of protection of the disclosure is not limited thereto. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

## Claims

1. A method for signal transmission, comprising:
detecting, by a terminal device, a first signal on first time unit(s), wherein the first time unit is configured as a time unit containing uplink transmission.

2. The method of claim 1, wherein all frequency-domain resources of the first time unit are configured to be used for uplink transmission.

3. The method of claim 1, wherein a part of frequency-domain resources of the first time unit are configured to be used for uplink transmission, and remaining frequency-domain resources of the first time unit are configured to be used for downlink transmission.

4. The method of any one of claims 1 to 3, wherein the first time unit(s) comprise a plurality of first time units, and the method further comprises:
detecting, by the terminal device, the first signal on a part of the plurality of first time units.

5. The method of claim 4, wherein the part of the first time units is determined based on one or more of:
a preset rule;
first configuration information sent by a network device; and
predefinition in a protocol.

6. The method of claim 4, wherein the part of the first time unit is a first time unit occupied by a transmission opportunity of the first signal among the plurality of first time units.

7. The method of any one of claims 1 to 6, wherein detecting, by the terminal device, the first signal on the first time unit comprises:
detecting, by the terminal device, the first signal on a first frequency-domain resource of the first time unit.

8. The method of claim 7, wherein the first frequency-domain resource is determined based on one or more of:
a preset rule;
second configuration information sent by a network device; and
predefinition in a protocol.

9. The method of any one of claims 1 to 8, further comprising:
detecting, by the terminal device, the first signal on a second time unit, wherein the second time unit is configured as a time unit used for downlink transmission, or configured as a flexible time unit.

10. The method of claim 9, wherein the terminal device detects the first signal on a second frequency-domain resource of the second time unit, wherein the second frequency-domain resource is the same as the first frequency-domain resource or different from the first frequency-domain resource, and the first frequency-domain resource is a frequency-domain resource in the first time unit, which is used for detecting the first signal.

11. The method of any one of claims 1 to 10, wherein the first time unit is any one of:
a slot, a mini slot, a time-domain symbol, or a set of time-domain symbols.

12. The method of any one of claims 1 to 11, wherein the first signal is used for waking up the terminal device.

13. The method of any one of claims 1 to 12, wherein the first signal is a signal received based on one or more of: envelope detection, amplitude detection, frequency detection, and phase detection.

14. The method of any one of claims 1 to 13, wherein the terminal device is one or more of: a terminal having a primary receiver and a secondary receiver, a zero-power-consumption terminal, a low-power-consumption terminal, a low-cost terminal, and a low-capability terminal,
wherein when the terminal device is the terminal having the primary receiver and the secondary receiver, the terminal device detects the first signal through the secondary receiver.

15. A method for signal transmission, comprising:
sending, by a network device, a first signal on first time unit(s), wherein the first time unit is configured as a time unit containing uplink transmission.

16. The method of claim 15, wherein all frequency-domain resources of the first time unit are configured to be used for uplink transmission.

17. The method of claim 15, wherein a part of frequency-domain resources of the first time unit are configured to be used for uplink transmission, and remaining frequency-domain resources of the first time unit are configured to be used for downlink transmission.

18. The method of any one of claims 15 to 17, wherein the first time unit(s) comprise a plurality of first time units, and the method further comprises:
sending, by the network device, the first signal on a part of the plurality of first time units.

19. The method of claim 18, wherein the part of the first time units is determined based on one or more of:
a preset rule;
first configuration information sent by a network device; and
predefinition in a protocol.

20. The method of claim 18, wherein the part of the first time unit is a first time unit occupied by a transmission opportunity of the first signal among the plurality of first time units.

21. The method of any one of claims 15 to 20, wherein sending, by the network device, the first signal on the first time unit comprises:
sending, by the network device, the first signal on a first frequency-domain resource of the first time unit.

22. The method of claim 21, wherein the first frequency-domain resource is determined based on one or more of:
a preset rule;
second configuration information sent by a network device; and
predefinition in a protocol.

23. The method of any one of claims 15 to 22, further comprising:
sending, by the network device, the first signal on a second time unit, wherein the second time unit is configured as a time unit used for downlink transmission, or configured as a flexible time unit.

24. The method of claim 23, wherein the network device sends the first signal on a second frequency-domain resource of the second time unit, wherein the second frequency-domain resource is the same as the first frequency-domain resource or different from the first frequency-domain resource, and the first frequency-domain resource is a frequency-domain resource in the first time unit, which is used for sending the first signal.

25. The method of any one of claims 15 to 24, wherein the first time unit is any one of:
a slot, a mini slot, a time-domain symbol, or a set of time-domain symbols.

26. The method of any one of claims 15 to 25, wherein the first signal is used for waking up a terminal device.

27. The method of any one of claims 15 to 26, wherein the first signal is a signal received based on one or more of: envelope detection, amplitude detection, frequency detection, and phase detection.

28. The method of any one of claims 15 to 27, wherein the terminal device receiving the first signal is one or more of: a terminal having a primary receiver and a secondary receiver, a zero-power-consumption terminal, a low-power-consumption terminal, a low-cost terminal, and a low-capability terminal,
wherein when the terminal device is the terminal having the primary receiver and the secondary receiver, the terminal device detects the first signal through the secondary receiver.

29. A device for signal transmission, applied to a terminal device, comprising:
a receiving unit, configured to detect a first signal on first time unit(s), wherein the first time unit is configured as a time unit containing uplink transmission.

30. A device for signal transmission, applied to a network device, comprising:
a sending unit, configured to send a first signal on first time unit(s), wherein the first time unit is configured as a time unit containing uplink transmission.

31. A terminal device, comprising:
a memory configured to store computer-executable instructions; and
a processor connected to the memory and configured to implement the method of any one of claims 1 to 14 by executing the computer-executable instructions.

32. A network device, comprising:
a memory configured to store computer-executable instructions;
a processor connected to the memory and configured to implement the method of any one of claims 15 to 28 by executing the computer-executable instructions.

33. A chip, comprising:
a processor configured to invoke and execute a computer program from a memory, to cause a device on which the chip is mounted to perform the method of any one of claims 1 to 14, or perform the method of any one of claims 15 to 28.

34. A computer-readable storage medium having stored thereon a computer program that, when executed by at least one processor, implements the method of any one of claims 1 to 14, or the method of any one of claims 15 to 28.

35. A computer program product comprising a computer storage medium, where the computer storage medium is configured to store a computer program comprising instructions executable by at least one processor, and the method of any one of claims 1 to 14 is implemented or the method of any one of claims 15 to 28 is implemented when the instructions are executed by the at least one processor.

36. A computer program that causes a computer to perform the method of any one of claims 1 to 14, or implement the method of any one of claims 15 to 28.
